# EUROPÄISCHE PATENTSCHRIFT

(11) **EP 0 609 194 B1**
(45) Veröffentlichungstag und Bekanntmachung des Hinweises auf die Patenterteilung: **12.03.1997**
(21) Anmeldenummer: 94890014.7
(22) Anmeldetag: 20.01.1994
(51) Int. Cl.: B60C 11/12

(54) **Fahrzeugreifen**
Vehicle tyre
Bandage pneumatique pour véhicule

(30) Priorität: 28.01.1993 AT 143/93
(43) Veröffentlichungstag der Anmeldung: 03.08.1994
(73) Patentinhaber: Semperit Reifen Aktiengesellschaft, A-2514 Traiskirchen (AT)
(72) Erfinder: Diensthuber, Franz, A-2544 Schönau (AT)
(74) Vertreter: Vinazzer, Edith, Dipl.-Ing.

(56) Entgegenhaltungen:
- AT-B- 394 684
- PATENT ABSTRACTS OF JAPAN vol. 13, no. 380 (M-863)23. September 1989 & JP-A-01 132 406 (YOKOHAMA TIRE&RUBBER CO LTD.) 24. Mai 1989
- PATENT ABSTRACTS OF JAPAN vol. 12, no. 381 (M-752)12. Oktober 1988 & JP-A-63 134 312 (BRIDGESTONE CORP.) 6. Juni 1988
- PATENT ABSTRACTS OF JAPAN vol. 12, no. 149 (M-694)10. Mai 1988 & JP-A-62 268 709 (BRIDGESTONE CORP.) 21. November 1987
- PATENT ABSTRACTS OF JAPAN vol. 15, no. 260 (M-1131)2. Juli 1991 & JP-A-03 086 604 (BRIDGESTONE CORP.) 11. April 1991
- PATENT ABSTRACTS OF JAPAN vol. 15, no. 381 (M-1162)26. September 1991 & JP-A-03 153 405 (SUMITOMO RUBBER IND. LTD.) 1. Juli 1991

## Beschreibung

Die vorliegende Erfindung betrifft einen insbesondere für den Wintereinsatz vorgesehenen Fahrzeugreifen mit einem Laufstreifenprofil, welches Profilblöcke aufweist, die jeweils mit einer Anzahl von im wesentlichen in Profilquerrichtung orientierten und, in Draufsicht betrachtet, zumindest im wesentlichen treppenartig, zick-zack- oder wellenförmig verlaufenden Feineinschnitten und mindestens einer in zumindest eine Profilrille mündenden Entlüftungsnut für diese Feineinschnitte versehen sind, wobei die Entlüftungsnuten breiter und seichter ausgeführt sind als die Feineinschnitte.

Fahrzeugluftreifen, die insbesondere für den Einsatz unter winterlichen Fahrbedingungen geeignet sind, besitzen im allgemeinen ein Laufstreifenprofil, dessen Profilelemente bzw. Profilblöcke mit einer Vielzahl von Feineinschnitten versehen sind. Solche Feineinschnitte unterstützen wirkungsvoll die Übertragung von Traktions- und Bremskräften. Um eine gewisse Blockbiegesteifigkeit auch beim Auftreten von seitlichen Kräften zu gewährleisten, werden solche Feineinschnitte oft zick-zack- oder wellenförmig verlaufend gestaltet. Die Feineinschnitte öffnen bzw. schließen sich beim Abrollen des Reifens beim Ein- bzw. Auslauf in die und aus der Kontaktfläche mit dem Untergrund. Dabei wird das sich in den Feineinschnitten befindende Luftvolumen zusammengepreßt und wieder entspannt. Die dabei verursachten hochfrequenten Geräusche sind als eine Art Zischgeräusche subjektiv wahmehmbar. Man ist daher dazu übergegangen, solche Feineinschnitte durch Entlüftungsnuten, die im wesentlichen quer zu den Feineinschnitten angeordnet werden und in eine Profilnut einmünden, zu entlüften. Derartige Entlüftungsnuten sind im allgemeinen etwa einen Millimeter breit und weisen eine Tiefe von etwa einem bis drei Millimetern auf. Die relativ geringe Tiefe der Entlüftungsnuten ist dadurch begründet, daß im Neuzustand des Reifens das Feineinschnittvolumen am größten ist und sich somit der geschilderte Luftkompressionseffekt am störendsten auswirkt.

Ein Fahrzeugreifen gemäß dem Oberbegriff des Anspruches 1 ist beispielsweise aus der AT-B 394684 bekannt. Das Laufstreifenprofil dieses bekannten Reifens besitzt mehrere Blockreihen, deren Blöcke jeweils mit einer Anzahl von etwa zick-zack-förmig gestalteten Feineinschnitten versehen sind. Die Blöcke der beiden im Laufstreifenmittelbereich angeordneten Blockreihen besitzen jeweils eine in Reifenumfangsrichtung gerade verlaufende Entlüftungsnut für die Feineinschnitte dieser Blöcke.

Aus der JP-A 1132406 ist ein Laufstreifenprofil bekannt, welches sich ebenfalls aus mehreren Blockreihen zusammensetzt, deren Blöcke jeweils mit einer Anzahl von wesentlichen in Profilquerrichtung verlaufenden Feineinschnitten versehen sind, die im Bereich der Profilblockoberfläche von breiter als die Feineinschnitte ausgeführten und relativ seichten Nuten überdeckt sind. Diese Ausgestaltung wirkt sich auf das Abriebs- und das Traktionsverhalten von Reifen mit einem solchen Laufstreifenprofil, insbesondere auf schneeigem Untergrund, günstig aus.

Die Erfindung hat sich die Aufgabe gestellt, bei einem Fahrzeugluftreifen der eingangs genannten Art Maßnahmen zu setzen, durch die sowohl der Abbau des Kompressionsdruckes in den Feineinschnitten verbessert wird um eine weitere Verringerung des von dort stammenden Geräuschanteiles zu erzielen, als auch gute Griff- und Traktionseigenschaften sowohl auf schneeigem als auch auf eisigem Untergrund sichergestellt sind.

Gelöst wird die gestellte Aufgabe erfindungsgemäß dadurch, daß die Profilblöcke Entlüftungsnuten besitzen, die Abschnitte von benachbarten Feineinschnitten überdecken.

Nach der Erfindung sind demnach Abschnitte unterschiedlicher Feineinschnitte, durch Entlüftungsnuten überdeckt. In diesen überdeckenden Bereichen ist nun einerseits von vornherein das das hochfrequente Geräusch erzeugende Ausgangsvolumen der Feineinschnitte geringer und andererseits ist eine wesentlich wirksamere Entlüftung der Feineinschnitte gewährleistet. Das vom Reifen während des Abrollens abgestrahlte Geräusch wird somit insgesamt günstiger. Gleichzeitig besitzen erfindungsgemäß gestaltete Laufstreifenprofile sehr gute Griff- und Traktionseigenschaften.

Eine besonders vorteilhafte Ausgestaltung der Erfindung besteht darin, daß die benachbarten Feineinschnitte mit zumindest im wesentlichen miteinander fluchtenden Abschnitten versehen sind, die durch eine gerade verlaufende Entlüftungsnut überdeckt sind.

Bei einer ersten Variante überdeckt die Entlüftungsnut diese Feineinschnittabschnitte mittig. Für die Ausformung des Laufstreifenprofiles in der Vulkanisationsform ist es günstig, wenn die Feineinschnittabschnitte zumindest im wesentlichen in Verlängerung einer der Entlüftungsnutwände verlaufen.

Bei einer bevorzugten Ausführungsform der Erfindung bilden die Feineinschnitte gemeinsam mit den Entlüftungsnuten eine Art Netzwerk, derart, daß der Profilblock in eine Vielzahl von zumindest im wesentlichen parallelogramm- oder rechteckförmigen Profilelemente gegliedert ist. Da sowohl die Entlüftungsnuten als auch die Feineinschnitte Griffkanten bilden wirkt sich eine solche Anordnung insgesamt auch auf die Griffeigenschaften des Laufstreifenprofiles und zwar sowohl in Längs- als auch in Querrichtung günstig aus.

In diesem Zusammenhang ist es von Vorteil, wenn die Entlüftungsnuten unter einem Winkelvon bis zu 45°, insbesondere unter einem Winkel von 15 bis 30°, bezogen auf die Äquatorlinie des Laufstreifens, verlaufen.

Bei einer weiteren Ausführungsform der Erfindung sind in jenem Laufstreifenbereich, der bei am Fahrzeug montierten Reifen der Fahrzeuglängsachse näher liegt, Profilblöcke vorgesehen, die ein dichteres Netzwerk aus Entlüftungsnuten und Feineinschnitten aufweisen, als die Profilblöcke im Laufstreifenaußenbereich.

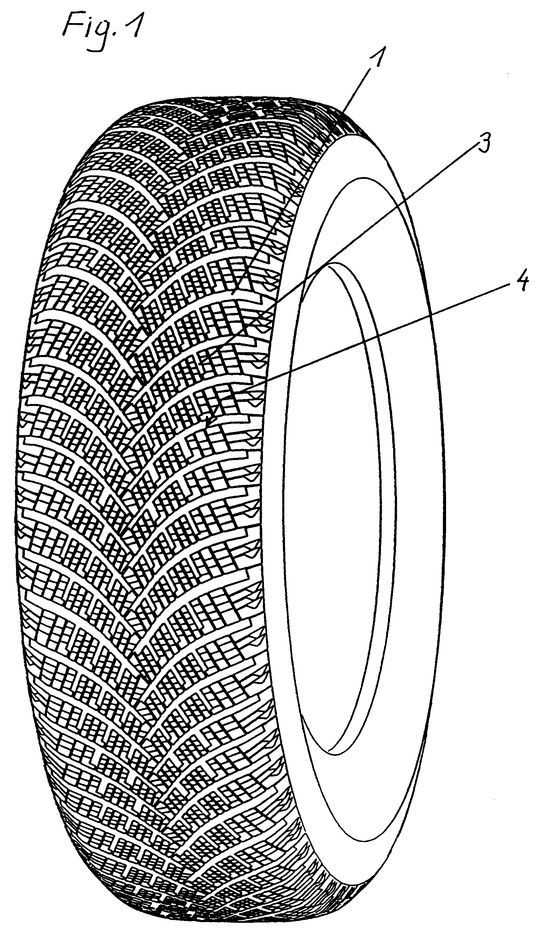

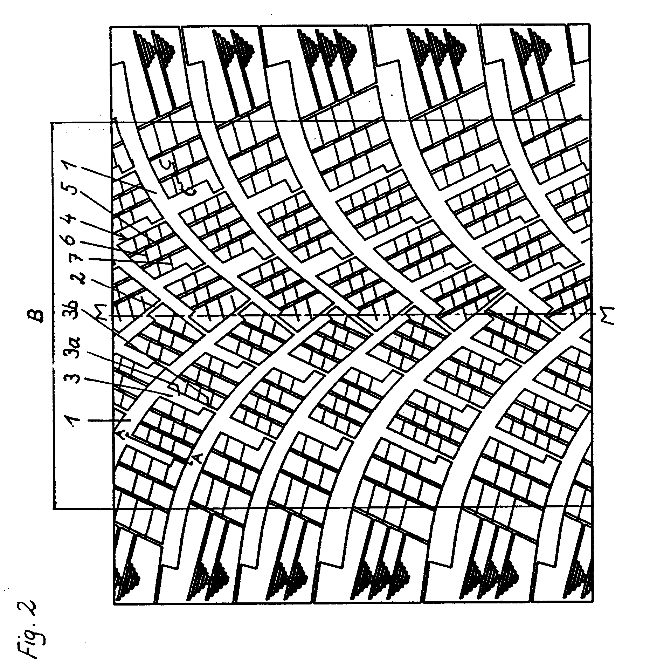

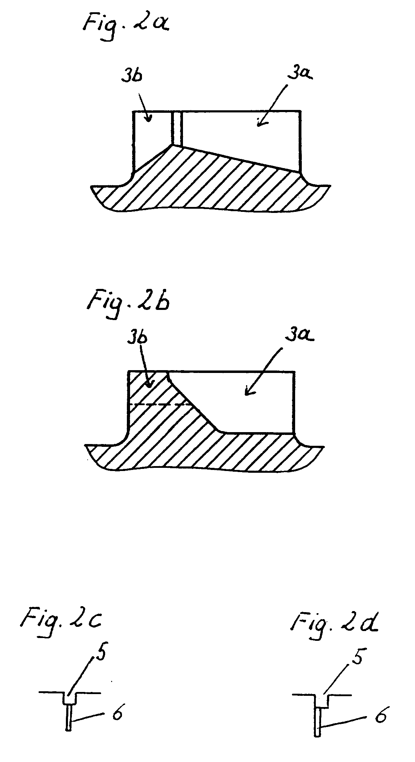

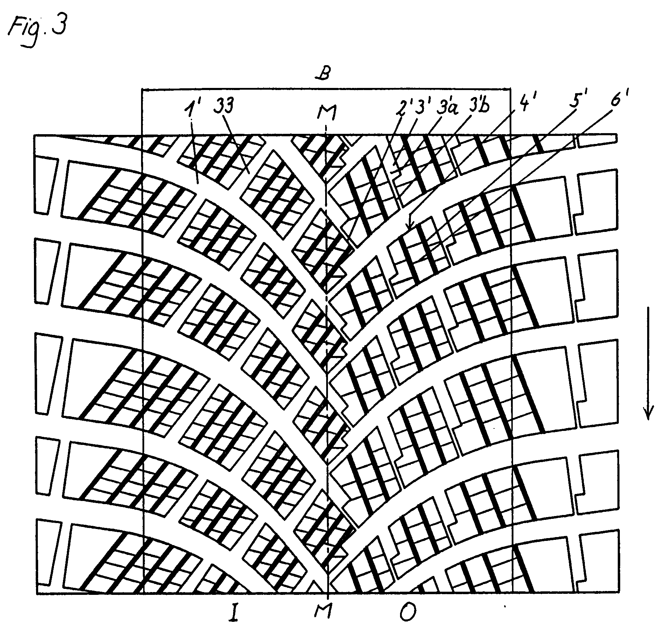

Weitere Merkmale, Vorteile und Einzelheiten der Erfindung werden nun anhand der Zeichnung, die zwei Ausführungsbeispiele der Erfindung darstellt, näher beschrieben. Dabei zeigt Fig. 1 eine Schrägansicht eines nach der Erfindung gestalteten Reifens, Fig. 2 eine Draufsicht auf eine Teilabwicklung des Laufflächenprofiles des Reifens gemäß Fig. 1, Fig. 2a einen Schnitt entlang der Linie A-A der Fig. 2, Fig. 2b eine Variante zu Fig. 2a, Fig. 2c einen Schnitt entlang der Linie C-C der Fig. 2, Fig. 2d eine Variante zu Fig. 2c und Fig. 3 eine Draufsicht auf eine Teilabwicklung eines Laufstreifens mit einem zweiten Ausführungsbeispiel der Erfindung.

Der in Fig. 1 in Schrägansicht dargestellte Reifen ist ein für den Einsatz unter winterlichen Fahrbedingungen vorgesehener Reifen für Personenkraftwagen, die höhere Geschwindigkeiten erreichen können. Dieser Reifen ist als Gürtelreifen mit einer Radialkarkasse konzipiert und kann somit in herkömmlicher Art und Weise aufgebaut sein. Der Reifen besitzt ein Laufstreifenprofil, dessen bodenberührender Bereich durch die Laufstreifenbreite B definiert ist. Die Laufstreifenbreite B entspricht der Profilbreite in der Bodenaufstandsfläche unter Normdruck und Normlast, wobei der Reifen auf seine Normfelge aufgebracht ist.

Unter Bezugnahme auf Fig. 1 und auf Fig. 2 werden nun im folgenden die konstruktiven Details des Laufstreifenprofiles näher erörtert. Dabei ist die Laufstreifenprofilmitte durch die Äquatorlinie M-M gekennzeichnet. Das Laufstreifenprofil besitzt in jeder Laufflächenhälfte verlaufende seitliche Rillen 1, die von den Schulterbereichen ausgehend zur Äquatorlinie M-M verlaufen und die, wie weiter unten noch beschrieben wird, jeweils ein kurzes Stück über die Äquatorlinie M-M in die zweite Laufflächenhälfte hinein ragen. Die in Umfangsrichtung voneinander beabstandeten seitlichen Rillen 1 bilden ein sogenanntes gerichtetes oder laufrichtungsgebundenes Laufstreifenmuster, indem sie derart kontinuierlich gekrümmt sind, daß der Winkel zwischen Tangenten an die jeweilige Rillenmittellinie und der Äquatorlinie M-M von der Äquatorlinie M-M zu den Laufstreifenrändern zu größer wird. Im vorliegenden Ausführungsbeispiel beträgt dieser Winkel im Bereich der Äquatorlinie M-M etwa 40° und wächst bis zum Laufstreifenrand auf ca. 80° an. Die seitlichen Rillen 1 werden zu den Laufstreifenrändern zu stetig breiter, wobei ihre Breite im Bereich der Äquatorlinie M-M ca. 4 bis 6 mm und im Bereich der Laufstreifenränder zwischen 7 und 9 mm beträgt. Die seitlichen Rillen 1, die in der einen Hälfte des Laufstreifenprofiles verlaufen, sind gegenüber den in der anderen Hälfte des Laufstreifenprofiles verlaufenden seitlichen Rillen 1 in Umfangsrichtung betrachtet gegeneinander versetzt, so daß jede seitliche Rille 1, die in der einen Laufstreifenhälfte verläuft über einen Verbindungsabschnitt 2 mit einer seitlichen Rille 1 aus der zweiten Laufstreifenhälfte verbunden ist. Der Reifen wird derart am Fahrzeug angeordnet, daß beim Abrollen des Reifens die axial inneren Endbereiche der seitlichen Rillen 1 zuerst in die Kontaktfläche mit dem Untergrund eintreten. Die schmalen Verbindungsabschnitte 2 sind nun in Verlängerung der einen Rillenwand angeordnet und weisen eine Breite von ca. 2 mm und eine Tiefe von 4 bis 6 mm auf.

In jeder Laufstreifenhälfte erfolgt durch je drei zumindest im wesentlichen parallel zueinander verlaufende Nuten 3, die die einander in Umfangsrichtung benachbarten seitlichen Rillen 1 miteinander verbinden, eine Gliederung des Laufstreifens in Blöcke 4. Die als gerade Nuten ausgebildeten Nuten 3 sind gegenüber der Umfangsrichtung (Äquatorlinie M-M) unter einem Winkel, der zwischen 15 und 40° beträgt, im vorliegenden Ausführungsbeispiel unter einem Winkel von ca. 25°, geneigt, wobei durch die insgesamt V-förmige Anordnung der seitlichen Rillen 1 die Neigung der Nuten 3, bezogen auf die Äquatorlinie M-M, in den beiden Laufstreifenhälften zueinander gegensinnig erfolgt. Die Nuten 3 haben einen breiten Nutabschnitt 3a und einen schmalen Nutabschnitt 3b, wobei der schmale Nutabschnitt 3b jener ist, mit dem die Nuten 3 beim Abrollen des Reifens zuerst in die Kontaktfläche mit dem Untergrund eintreten. Der breite Nutabschnitt 3a verläuft über einen Bereich von 50 bis 90 Prozent der Länge der Nuten 3, im vorliegenden Ausführungsbeispiel von ca. 80 Prozent. Die breiten Nutabschnitte 3a besitzen eine konstante Breite von 4 bis 7 mm, die schmalen Nutabschnitte 3b haben eine konstante Breite von 1,3 bis 3 mm, insbesondere von 2 mm. Die schmalen Nutabschnitte 3b besitzen eine Nutwand, die in Verlängerung der axial innen verlaufenden Nutwand des breiten Abschnittes 3a der Nuten 3 verläuft. Wie Fig. 2a zeigt, steigt der Nutgrund im Bereich des breiten Nutabschnittes 3a stetig an, um im Bereich des schmalen Nutabschnittes 3b wiederum auf die ursprüngliche Nuttiefe stetig abzufallen. Die Stelle mit der geringsten Nuttiefe besitzt eine Nuttiefe zwischen 3 und 6 mm, im vorliegenden Ausführungsbeispiel eine Tiefe von 4 mm. Fig. 2b zeigt eine mögliche Variante der Ausgestaltung der Nut 3 mit einer Grundanhebung, wobei im breiten Nutabschnitt 3a vorerst eine konstante Nuttiefe vorliegt und durch eine Schräge ein Übergang zu einer im Bereich des schmalen Nutabschnittes 3b reduzierten Nuttiefe, die dort konstant gehalten ist, erfolgt. Während des Gebrauchs des Reifens erfolgt durch den Profilabrieb, sobald also der Laufstreifen auf die Dessintiefe der schmalen Nutabschnitte 3b abgefahren ist, eine Änderung der Profilcharakteristik, da die Nuten 3 dann Sacknuten bilden und die ursprüngliche Blockstruktur zwischen benachbarten seitlichen Rillen 1 in eine Art Bandstruktur übergeht.

Die Blöcke 4 sind im Neuzustand des Reifens durch ein Netzwerk von Entlüftungsnuten 5 und Feineinschnitten 6 strukturiert. Jeder Block 4 besitzt zumindest 2 Feineinschnitte 6 mit einem, in Draufsicht betrachtet, treppenartigen Verlauf mit mindestens einer Abstufung. Die derart gebildeten langen und kurzen Abschnitte der Feineinschnitte 6 verlaufen in den Blöcken 4 in jeder Laufflächenhälfte zumindest im wesentlichen jeweils parallel zueinander, wobei die langen Abschnitte gegenüber der Äquatorlinie M-M unter einem Winkel von etwa 75° verlaufen und in den beiden Laufstreifenhälften eine gegensinnige Orientierung dieses Winkels gegeben ist. Im wesentlichen parallel zu den Nuten 3 sind pro Block 4 mindestens 2 Entlüftungsnuten 5 vorgesehen, die geradlinig zwischen benachbarten seitlichen Rillen 1 verlaufen und die kurzen Abschnitte der Feineinschnitte 6 überdecken. Diese Entlüftungsnuten 5 weisen eine Breite von ca. 0,8 bis 1 mm und eine Tiefe von ebenfalls 1 mm auf, können jedoch bis zu 3 mm tief vorgesehen werden. Vereinzelt sind in Blöcken 4 Feineinschnitte 7 angeordnet, die lediglich aus einem geraden, zwischen benachbarten Entlüftungsnuten 5 oder zwischen einer Entlüftungnsut 5 und einer Nut 3 verlaufenden Abschnitt bestehen. Auch diese Feineinschnitte 7 verlaufen parallel zu den langen Abschnitten der Feineinschnitte 6. Die Schnittzeichnung in Fig. 2c zeigt die Anordnung eines der kurzen Abschnitte der Feineinschnitte 6 mit einer Entlüftungsnut 5, wobei die Entlüftungsnut 5 diesen Feineinschnittabschnitt mittig überdeckt. Fig. 2d zeigt eine Variante zu Fig. 2c, wobei der Feineinschnittabschnitt zumindest im wesentlichen in Verlängerung einer der Entlüftungsnutwände verläuft.

Die Feineinschnitte 6, 7 haben eine Breite ≤ 0,8 mm, insbesondere etwa 0,5 mm, und sind mit einer Dessintiefe von mindestens 4 mm, bevorzugt mit einer Tiefe, die der sonstigen Profiltiefe entspricht, vorgesehen. Im Fahrbetrieb des Reifens verschwinden die Entlüftungsnuten durch den Laufstreifenabrieb und in den einzelnen Blöcken 4 bleibt eine Vielzahl von die Griffeigenschaften günstig beeinflussenden Lamellenfeineinschnitten 6 und 7 bestehen.

Das in Fig. 3 dargestellte Laufstreifenprofil ist bezüglich der Äquatorlinie M-M asymmetrisch gestaltet und unterscheidet sich in einigen Details von dem in Fig. 1 dargestellten. Ein mit dieser Profilvariante versehener Reifen ist derart am Fahrzeug zu montieren, daß der mit I bezeichnete Laufstreifenbereich fahrzeuginnenseitig (der Fahrzeuglängsachse zugekehrt) liegt. Mit O ist der zweite Laufstreifenbereich bezeichnet. Über die Laufstreifenbreite B betrachtet besitzt dieses Laufstreifenprofil wiederum seitliche Rillen 1', die ebenfalls ein gerichtetes Laufstreifenmuster ergeben und kontinuierlich gekrümmt sind. Die in jeder Laufflächenhälfte verlaufenden seitlichen Rillen 1' sind über Verbindungsabschnitte 2', die in Verlängerung der der Drehrichtung zugewandten Rillenwände angeordnet sind, mit je einer seitlichen Rille 1' aus dem zweiten Laufstreifenbereich verbunden. Im Laufstreifenaußenbereich O sind die in Umfangsrichtung einander benachbarten seitlichen Rillen 1' durch gegenüber der Umfangsrichtung unter einem Winkel von ca. 25° geneigten Nuten 3' miteinander verbunden, deren Ausgestaltung und Anordnung, wie beim Ausführungsbeispiel gemäß Fig. 2 beschrieben, erfolgt. Die Nuten 3' besitzen demnach breite und schmale Nutabschnitte 3'a, 3'b. Im Laufstreifeninnenbereich I sind die in Umfangsrichtung benachbarten Rillen 1' durch Nuten 33 miteinander verbunden, die bezüglich der Äquatorlinie M-M betrachtet gegensinnig zu den Nuten 3' verlaufen und in der Abrollrichtung des Reifens betrachtet (siehe den Pfeil in Fig. 3) kontinuierlich breiter werden. Im vorliegenden Ausführungsbeispiel beträgt diese Breitenänderung zwei bis drei Millimeter, so daß die Nuten 33 eine Breite aufweisen, die von drei bis sechs Millimeter auf fünf bis neun Millimeter anwächst. Dabei schließen die Mittellinien der Nuten 33 mit der Äquatorlinie M-M einen Winkel ein, der um etwa 10 bis 25° größer ist als jener, den die Nuten 3' mit der Äquatorlinie M-M einschließen, wobei letzterer 15 bis 40°, im vorliegenden Ausführungsbeispiel ca. 25° beträgt.

Die durch die seitlichen Rillen 1' und die Nuten 3 bzw. 33 gebildeten Blöcke 4' sind ebenfalls durch ein Netzwerk von Entlüftungsnuten 5' und Feineinschnitten 6' strukturiert. Dieses Netzwerk ist nun im Laufstreifeninnenbereich I dichter als im Laufstreifenaußenbereich O. Im dargestellten Ausführungsbeispiel sind etwa in den im wesentlichen zum Laufstreifeninnenbereich gehörenden Blöcken 4' pro Block drei Entlüftungsnuten 5' und im Außenbereich O pro Block 4' zwei Entlüftungsnuten 5' angeordnet. Auch die Anzahl der Feineinschnitte 6' ist im Laufstreifeninnenbereich I größer als im Laufstreifenaußenbereich O. Die Ausgestaltung der Feineinschnitte 6' und deren Anordnungen gemeinsam mit den Entlüftungsnuten 5' entspricht jenen gemäß Fig. 2.

Die Erfindung ist auf die dargestellten Ausführungsbeispiele nicht eingeschränkt. Profilelemente mit der erfindungsgemäßen Anordnung von Feineinschnitten und Entlüftungsnuten können selbstverständlich auch in anders gestalteten Laufstreifenprofilen, beispielsweise in nicht laufrichtungsgebundenen und/oder mit Laufstreifenbändern und Profilblöcken versehenen Profilen, angeordnet werden. Abweichend von der dargestellten Form können die Feineinschnitte auch wellenförmig verlaufen. Es können ferner die Entlüftungsnuten einen vom geraden Verlauf abweichenden Verlauf aufweisen. Sowohl die breiten als auch die schmalen Nutabschnitte der Nuten 3 können eine Breite aufweisen, die sich über ihre Längserstreckung insbesondere kontinuierlich ändert. Es ist auch möglich, daß die Nuten 3 einen vom dargestellten Verlauf abweichenden, demnach gekrümmten Verlauf aufweisen.

## Patentansprüche

1. Fahrzeugreifen, insbesondere für den Wintereinsatz, mit einem Laufstreifenprofil, welches Profilblöcke aufweist, die jeweils mit einer Anzahl von im wesentlichen in Profilquerrichtung orientierten und, in Draufsicht betrachtet, zumindest im wesentlichen treppenartig, zick-zack- oder wellenförmig verlaufenden Feineinschnitten und mindestens einer in zumindest eine Profilrille mündenden Entlüftungsnut für diese Feineinschnitte versehen sind, wobei die Entlüftungsnuten breiter und seichter ausgeführt sind als die Feineinschnitte, dadurch gekennzeichnet, daß die Profilblöcke (4, 4') Entlüftungsnuten (5, 5') besitzen, die Abschnitte von benachbarten Feineinschnitten (6, 6') überdecken.

2. Fahrzeugreifen nach Anspruch 1, dadurch gekennzeichnet, daß die benachbarten Feineinschnitte (6, 6') mit zumindest im wesentlichen miteinander fluchtenden Abschnitten versehen sind, die durch eine gerade verlaufende Entlüftungsnut (5, 5') überdeckt sind.

3. Fahrzeugreifen nach Anspruch 1 oder Anspruch 2, dadurch gekennzeichnet, daß die Feineinschnittabschnitte durch die Entlüftungsnut (5, 5') mittig überdeckt sind.

4. Fahrzeugreifen nach Anspruch 1 oder Anspruch 2, dadurch gekennzeichnet, daß die Feineinschnittabschnitte zumindest im wesentlichen in Verlängerung einer der Entlüftungsnutwände verlaufen.

5. Fahrzeugreifen nach einem der Ansprüche 1 bis 4, dadurch gekennzeichnet, daß die Feineinschnitte (6, 6') gemeinsam mit den Entlüftungsnuten (5, 5') eine Art Netzwerk bilden, derart, daß der Profilblock (4, 4') in eine Vielzahl von zumindest im wesentlichen parallelogramm- oder rechteckförmigen Profilelemente gegliedert ist.

6. Fahrzeugreifen nach einem der Ansprüche 1 bis 5, dadurch gekennzeichnet daß die Entlüftungsnuten (5, 5') unter einem Winkel von bis zu 45°, insbesondere unter einem Winkel von 15 bis 30°, bezogen auf die Äquatorlinie des Laufstreifens, verlaufen.

7. Fahrzeugreifen nach einem der Ansprüche 1 bis 6, dadurch gekennzeichnet, daß in jenem Laufstreifenbereich, der bei am Fahrzeug montierten Reifen der Fahrzeuglängsachse näher liegt, Profilblöcke (4') vorgesehen sind, die ein dichteres Netzwerk aus Entlüftungsnuten (3') und Feineinschnitten (6') aufweisen, als die Profilblöcke im Laufstreifenaußenbereich.

## Claims

1. Vehicle tyre, especially for winter use, with a tread profile having profile blocks provided respectively with a number of fine incisions aligned substantially in the transverse direction of the profile and, seen in plan view, extending art least substantially in a stepped, zig-zag or corrugated configuration, and at least one ventilation groove opening into at least one profile channel, the ventilation grooves being wider and shallower in construction than the fine incisions, characterised in that the profile blocks (4, 4') have ventilation grooves (5, 5') which cover portions of adjacent fine incisions (6, 6').

2. Vehicle tyre according to claim 1, characterised in that the adjacent fine incisions |(6, 6') are provided with portions at least substantially flush with one another, and which are covered by a ventilation groove (5, 5') extending in a straight line.

3. Vehicle tyre according to claim 1 or claim 2, characterised in that the fine incision portions are covered centrally by the ventilation groove (5, 5').

4. Vehicle tyre according to claim 1 or claim 2, characterised in that the fine incision portions extend at least substantially in extension of one of the ventilation groove walls.

5. Vehicle tyre according to one of claims 1 to 4, characterised in that the fine incisions (6, 6') form together with the ventilation grooves (5, 5') a type of network, in such a way that the profile block (4, 4') is subdivided into a plurality of at least parallelogram-shaped or rectangular profile members.

6. Vehicle tyre according to one of claims 1 to 5, characterised in that the ventilation grooves (5, 5') extend at an angle of up to 45°, especially at an angle of 15 to 30° with respect to the equatorial line of the tyre tread.

7. Vehicle tyre according to one of claims 1 to 6, characterised in that there are provided, in each area of the tread which lies closer to the longitudinal axis of the vehicle when the tyre is fitted to the vehicle, profile blocks (4') which have a denser network of ventilation grooves (3') and fine incisions (6') than the profile blocks in the outer area of the tread.

## Revendications

1. Pneumatique de véhicule, notamment destiné à être utilisé en hiver, dont la bande de roulement possède une sculpture qui comporte des blocs pourvus chacun d'un nombre de fines découpes orientées essentiellement dans la direction transversale de la sculpture et qui, lorsqu'on regarde selon une vue en plan, s'étendent au moins essentiellement avec une forme d'escalier, en zig-zag ou avec une forme ondulée et sont pourvus au moins d'une rainure de désaération qui débouche dans au moins une rainure de la sculpture, pour ces fines découpes, les rainures de désaération étant réalisées avec une plus grande largeur et une profondeur plus faible que les fines entailles, caractérisé en ce que les blocs (4,4') de la sculpture possèdent des rainures de désaération (5,5') qui recouvrent des parties de fines entailles voisines (6,6').

2. Pneumatique de véhicule selon la revendication 1, caractérisé en ce que les fines entailles voisines (6, 6') comportent des parties qui sont au moins pour l'essentiel alignées entre elles et qui sont recouvertes par une rainure rectiligne de désaération (5,5').

3. Pneumatique de véhicule selon la revendication 1 ou 2, caractérisé en ce que les parties des fines entailles sont recouvertes en position centrée par la rainure de désaération (5,5').

4. Pneumatique de véhicule selon la revendication 1 ou 2, caractérisé en ce que les parties des fines entailles s'étendent au moins essentiellement dans le prolongement de l'une des parois des rainures de désaération.

5. Pneumatique de véhicule selon l'une des revendications 1 à 4, caractérisé en ce que les fines entailles (6,6') forment en commun, avec des rainures de désaération (5,5'), une sorte de réseau, de telle sorte que le bloc (4,4') de la sculpture est subdivisé en une multiplicité d'éléments de la sculpture qui ont au moins pour l'essentiel une forme de parallélogramme ou une forme rectangulaire.

6. Pneumatique de véhicule selon l'une des revendications 1 à 5, caractérisé en ce que les rainures de désaération (5,5') s'étendent sous un angle atteignant jusqu'à 45° et notamment sous un angle compris entre 15 et 30°, par rapport à la ligne équatoriale de la bande de roulement.

7. Pneumatique de véhicule selon l'une des revendications 1 à 6, caractérisé en ce que dans la zone de la bande de roulement qui est la plus proche de l'axe longitudinal du véhicule lorsque le pneumatique est monté sur le véhicule, sont prévus des blocs (4') de la sculpture qui possèdent un réseau plus dense de rainures de désaération (3') et de fines entailles (6') que celui que possèdent les blocs de la sculpture dans la zone extérieure de la bande de roulement.
